# EUROPEAN PATENT APPLICATION

(11) **EP 4 759 605 A1**
(43) Date of publication of application: **17.06.2026**
(21) Application number: 23952239.4
(22) Date of filing: 13.09.2023
(51) Int. Cl.: B60L 3/00

(54) **SERVER DEVICE, VEHICLE CONTROL DEVICE, AND ELECTRIC VEHICLE**

(71) Applicant: HONDA MOTOR CO., LTD., Tokyo 105-8404 (JP)
(72) Inventor: MURATA Yutaka, Tokyo 107-8556 (JP)
(74) Representative: Kiwit, Benedikt
(86) International application number: PCT/JP2023/033448
(87) International publication number: WO 2025/057346

(57) **Abstract**

This vehicle control device (20) comprises: a vehicle characteristic information acquisition unit (201) that acquires vehicle characteristic information indicating vehicle characteristics of a vehicle model; a vehicle characteristic information storage unit (203) that stores the vehicle characteristic information; a vehicle characteristic information setting unit (205) that sets the vehicle characteristic information to a host vehicle; and a sound generation unit (207) that generates sound. The vehicle characteristic information includes driving force characteristics of the driving device of the vehicle model and sound information about the driving device of the vehicle model. The vehicle characteristic information setting unit (205) sets the driving force characteristics of the driving device to the host vehicle, and the sound generation unit (207) sets the sound information about the driving device to the host vehicle.

## Description

### TECHNICAL FIELD

The present invention relates to a server device, a vehicle control device, and an electric vehicle.

### BACKGROUND ART

Many vehicles have been sold in the automobile industry. Among the vehicles, those of specific types have loyal fans. Such vehicles are no longer on sale, many of which are no longer available for driving even if you want to.

Meanwhile, for example, Patent Literatures 1 to 3 disclose that vehicle characteristics can be changed to preferred settings of a user. Patent Literature 4 discloses that vehicle characteristics of a first vehicle are set for a second vehicle different from the first vehicle.

According to these techniques, by applying the vehicle characteristics of a vehicle sold in the past to another vehicle, there is a possibility that the vehicle sold in the past can be embodied partially. In particular, in a battery EV vehicle (hereinafter referred to as an EV vehicle), the vehicle characteristics tend to be easily changed.

### CITATION LIST

### PATENT LITERATURE

Patent Literature 1: WO2003/084799
Patent Literature 2: JP2009-174879A
Patent Literature 3: US6941209B
Patent Literature 4: JP2021-24294A

### SUMMARY OF INVENTION

### TECHNICAL PROBLEM

However, in general, the EV vehicle is quiet in traveling sound and vehicle interior sound, and is excellent in power performance, but lacks auditory enjoyment of driving because there is no engine sound. Further, since there is no sound, it is difficult to obtain a sense of speed, and the user tends to get bored in a short time.

On the other hand, many vehicles having loyal fans are characterized by engine sounds. The user can enjoy a feeling of driving a preferred vehicle sold in the past due to the engine sound associated with acceleration, in addition to an acceleration performance.

The present invention provides a server device, a vehicle control device, and an electric vehicle that make it possible to enjoy, while driving a host vehicle, a feeling of driving another vehicle.

### SOLUTION TO PROBLEM

A server device of the present invention includes:
an image display control unit configured to control display of an image of each of a plurality of vehicle models which includes vehicle characteristic information indicating vehicle characteristics;
a purchase reception unit configured to receive a purchase of the vehicle model; and
a characteristic information providing unit configured to provide the vehicle characteristic information of the purchased vehicle model, and
the vehicle characteristic information includes driving force characteristics of a drive device of the vehicle model and sound information of the drive device of the vehicle model.

Further, a vehicle control device of the present invention includes:
a vehicle characteristic information acquisition unit configured to acquire vehicle characteristic information indicating vehicle characteristics of a vehicle model;
a vehicle characteristic information storage unit configured to store the vehicle characteristic information;
a vehicle characteristic information setting unit configured to set the vehicle characteristic information in a host vehicle; and
a sound generation unit configured to generate a sound, and
the vehicle characteristic information includes driving force characteristics of a drive device of the vehicle model and sound information of the drive device of the vehicle model,
the vehicle characteristic information setting unit sets the driving force characteristics of the drive device in the host vehicle, and
the sound generation unit sets the sound information of the drive device in the host vehicle.

Further, an electric vehicle of the present invention includes:
a drive device including at least one of a front-wheel driving motor and a rear-wheel driving motor;
a battery configured to supply electric power to the motor;
an acoustic device configured to emit a sound to a vehicle interior; and
a vehicle control device configured to control the drive device and the acoustic device,
the vehicle control device includes
   a vehicle characteristic information acquisition unit configured to acquire vehicle characteristic information indicating vehicle characteristics of a vehicle model,
   a vehicle characteristic information storage unit configured to store the vehicle characteristic information,
   a vehicle characteristic information setting unit configured to set the vehicle characteristic information in a host vehicle, and
   a sound generation unit configured to generate a sound,
the vehicle characteristic information includes driving force characteristics of the drive device of the vehicle model and sound information of the drive device of the vehicle model,
the vehicle characteristic information setting unit sets the driving force characteristics of the drive device in the host vehicle, and
the sound generation unit sets the sound information of the drive device of the vehicle model in the host vehicle.

### ADVANTAGEOUS EFFECTS OF INVENTION

According to the present invention, it is possible to enjoy, while driving a host vehicle, a feeling of driving another vehicle.

### BRIEF DESCRIPTION OF DRAWINGS

[Fig. 1] Fig. 1 is a diagram illustrating a configuration of a vehicle characteristic information providing system.
[Fig. 2] Fig. 2 is a diagram illustrating a functional configuration of a server device 1.
[Fig. 3] Fig. 3 is a diagram illustrating a vehicle model list screen G1.
[Fig. 4] Fig. 4 is a diagram illustrating a vehicle model detail screen G11.
[Fig. 5] Fig. 5 is a diagram illustrating a vehicle model detail screen G12.
[Fig. 6] Fig. 6 is a diagram illustrating a configuration of an electric vehicle 2 and a functional configuration of a vehicle control device 20.
[Fig. 7] Fig. 7 is a diagram illustrating a screen G2 on which vehicle models VM1, VM3, VM4, and VM5 purchased by a user are displayed.
[Fig. 8] Fig. 8 is a diagram illustrating a travel mode selection screen of the vehicle model VM3 when the user designates the vehicle model VM3.
[Fig. 9] Fig. 9 is a diagram illustrating setting items of an individual mode.

### DESCRIPTION OF EMBODIMENTS

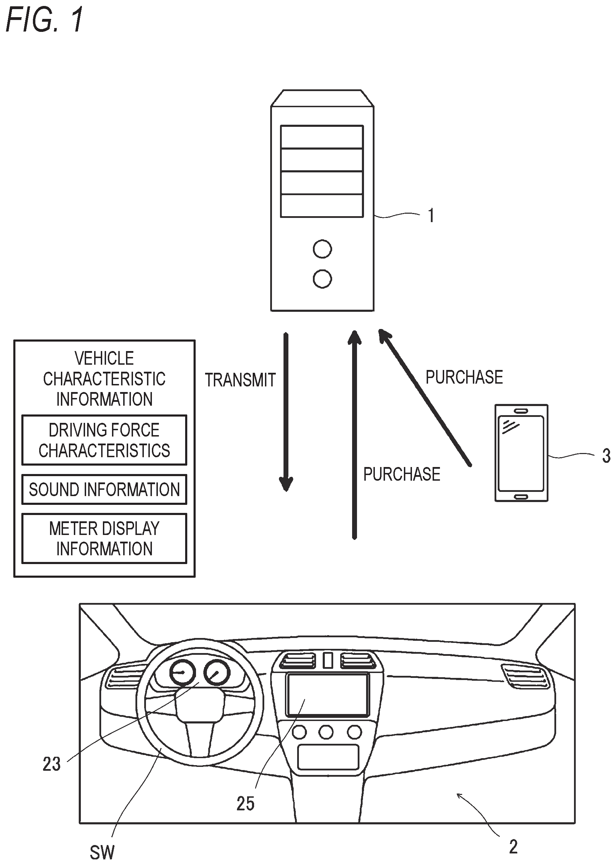

Hereinafter, an embodiment of the present invention will be described with reference to Figs. 1 to 9.

### [Vehicle Characteristic Information Providing System]

A vehicle characteristic information providing system illustrated in Fig. 1 includes a server device 1 that provides vehicle characteristic information of vehicle models, a portable terminal 3 such as a smartphone used by a user, an electric vehicle 2 (hereinafter, may be referred to as a host vehicle) that is a target for purchasing the vehicle characteristic information of the vehicle models from the server device 1 directly or via the portable terminal 3 from the server device 1 and setting the purchased vehicle characteristic information, and a network (not illustrated) that communicably connects the server device 1, the electric vehicle 2, and the portable terminal 3.

The vehicle models include, for example, famous vehicles, luxury vehicles, and sports vehicles (hereinafter, collectively referred to as tribute vehicles) that are sold in the past and are not currently sold. The vehicle characteristic information is information for reproducing vehicle characteristics of a vehicle model, and includes driving force characteristics of a drive device of the vehicle model and sound information (an engine sound or the like) of the drive device of the vehicle model. The vehicle characteristic information preferably includes meter display information of the vehicle model. Further, the vehicle characteristic information preferably includes characteristics related to running, stopping, and turning of a vehicle other than the driving force characteristics. The driving force characteristics may include steering characteristics such as a weight of a steering wheel and sharpness of the steering wheel, and may include braking characteristics such as a feeling of a brake, a weight of the brake, and effectiveness of the brake.

According to such a vehicle characteristic information providing system, the user can experience the host vehicle to which the driving force characteristics of the purchased vehicle model, the sound information of the drive device, and the meter display information are applied. Accordingly, the user can experience, while riding in the host vehicle, a feeling of driving another vehicle, for example, the tribute vehicle. In particular, by applying the sound information of the drive device and the meter display information in addition to the driving force characteristics, the tribute vehicle can be reproduced more faithfully.

### [Server device]

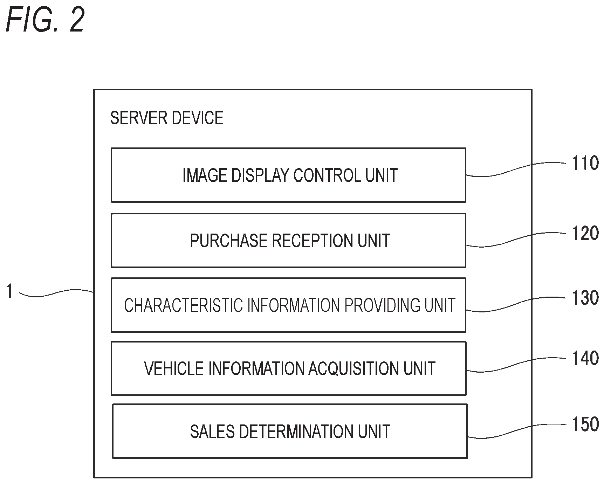

As illustrated in Fig. 2, the server device 1 includes, as functional configurations implemented by cooperation of hardware and software, an image display control unit 110, a purchase reception unit 120, a characteristic information providing unit 130, a vehicle information acquisition unit 140, and a sales determination unit 150.

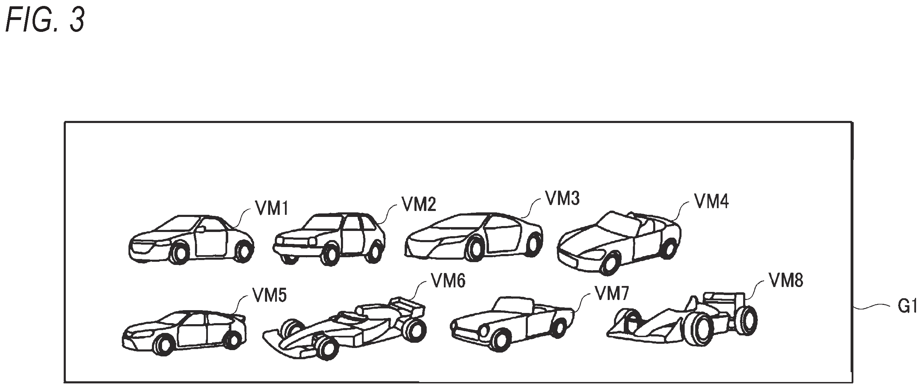

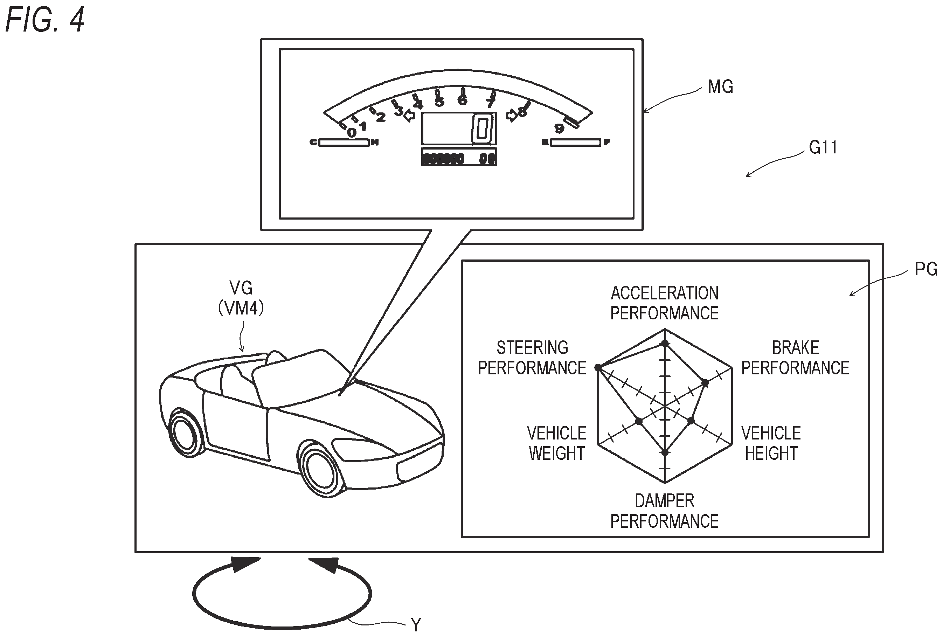

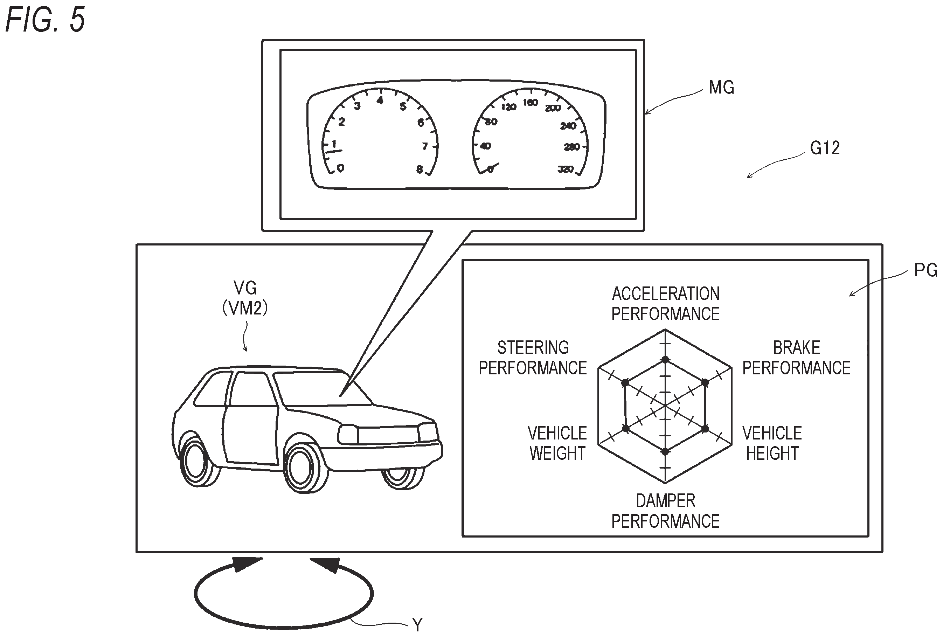

The image display control unit 110 displays a predetermined image on a screen of the electric vehicle 2 or the portable terminal 3 that has accessed the server device 1, and controls the display of the image in response to an operation of the user. For example, the image display control unit 110 of the present embodiment displays a vehicle model list screen G1 illustrated in Fig. 3 and a vehicle model detail screen G11 or G12 illustrated in Figs. 4 and 5 on the screen of the electric vehicle 2 or the portable terminal 3.

As illustrated in Fig. 3, the vehicle model list screen G1 includes images of a plurality of vehicle models VM1 to VM8 each including the vehicle characteristic information. In response to the user selecting either one of the vehicle models VM1 to VM8, the image display control unit 110 displays the vehicle model detail screen G11 or G12 of the selected one of the vehicle models VM1 to VM8 on the screen of the electric vehicle 2 or the portable terminal 3. The vehicle model list screen G1 may include a vehicle model for which the user can set the vehicle characteristic information, in addition to the tribute vehicle.

As shown in Figs. 4 and 5, each of the vehicle model detail screens G11 and G12 includes a vehicle model image VG, a performance characteristic image PG, and a meter display image MG.

The vehicle model image VG is an entire image of one of the vehicle models VM1 to VM8 selected by the user. The image display control unit 110 displays the vehicle model image VG in a rotatable manner. For example, the image display control unit 110 may rotate the vehicle model image VG automatically or in response to an operation of the user, such as touching a rotating arrow Y. Accordingly, the user can select a preferred one among the vehicle models VM1 to VM8 while viewing a full view of the preferred one of the vehicle models VM1 to VM8 before purchase. In particular, when the vehicle models VM1 to VM8 are tribute vehicles, it is possible to visually arouse purchase motivation.

The performance characteristic image PG indicates performance characteristics derived from the vehicle characteristic information of one of the vehicle models VM1 to VM8 selected by the user. For example, the image display control unit 110 derives the performance characteristics such as an acceleration performance, a brake performance, a vehicle height, a damper performance, a vehicle weight, and a steering performance based on the vehicle characteristic information of one of the vehicle models VM1 to VM8 selected by the user, and shows the derived performance characteristics in a radar chart or the like. According to such a performance characteristic image PG, the user can easily recognize the vehicle characteristics of each of the vehicle models VM1 to VM8 by displaying the performance characteristics before purchasing the vehicle models VM1 to VM8.

The meter display image MG shows a meter display of one of the vehicle models VM1 to VM8 selected by the user. The meter display image MG may be a still image or a moving image in which a vehicle speed or an engine speed to be displayed changes. According to such a meter display image MG, a preferred one among the vehicle models VM1 to VM8 can be selected in consideration of the meter display.

Further, it is desirable to output the sound information of the drive device of the selected one of the vehicle models VM1 to VM8, when the vehicle model detail screen G11 or G12 is displayed. According to the vehicle model detail screen G11 or G12, a preferred one among the vehicle models VM1 to VM8 can be selected in consideration of the sound information of the drive device.

The image display control unit 110 may display at least one of a body color, a wheel appearance, and presence or absence of an optional part model to be changeable by a selection of the user, in each of the images of the vehicle models VM1 to VM8. In this way, each of the images of the vehicle models VM1 to VM8 to be purchased can be expanded.

When the optional part model is sold for a purchased one of the vehicle models VM1 to VM8, the image display control unit 110 may display an image in which the optional part model is attached to the purchased one of the vehicle models VM1 to VM8. In this way, after purchasing one of the vehicle models VM1 to VM8 and before further purchasing the optional part model, the user can view the image of the purchased one of the vehicle models VM1 to VM8 to which the optional part model is attached.

The purchase reception unit 120 receives a purchase of each of the vehicle models VM1 to VM8. For example, a purchase button (not illustrated) is displayed on each of the vehicle model detail screens G11 and G12, and a purchase of one of the vehicle models VM1 to VM8 is received in response to a tap operation of the user on the purchase button. When receiving the purchase of one of the vehicle models VM1 to VM8, the purchase reception unit 120 requests input of user information, payment information, and the like, and completes a purchasing procedure.

The characteristic information providing unit 130 provides the user with the vehicle characteristic information (including a vehicle image) of the purchased one of the vehicle models VM1 to VM8. For example, after the purchasing procedure is completed, the characteristic information providing unit 130 displays a download screen of the vehicle characteristic information and permits the electric vehicle 2 or the portable terminal 3 to download the vehicle characteristic information.

The vehicle characteristic information provided by the characteristic information providing unit 130 may include a plurality of travel modes (a sport mode, a comfort mode, an eco-mode, and the like) that can be selectively switched. The plurality of travel modes are different in the driving force characteristics of the drive device and the sound information, and the vehicle characteristics are switched according to situations and preferences. Further, the plurality of travel modes may include an individual mode in which the vehicle characteristic information can be individually set. Details of the travel modes will be described later.

When the optional part model is purchased, the characteristic information providing unit 130 provides, to the user, the vehicle image in which the optional part model is attached to the purchased one of the vehicle models VM1 to VM8 and the vehicle characteristic information corresponding to the optional part model. In this way, when the optional part model such as a wing model or an aero part model is added, by changing the vehicle characteristic information to increase a downforce, a vehicle behavior can also be changed in addition to a change in appearance.

When tire replacement of the sold vehicle models VM1 to VM8 is possible, the characteristic information providing unit 130 preferably provides the vehicle characteristic information corresponding to a purchased tire model to the user. In this way, when the tire replacement is performed, by changing the vehicle characteristic information to increase a grip force of a tire, the vehicle behavior can be changed.

The vehicle information acquisition unit 140 acquires vehicle information and a vehicle state of the electric vehicle 2 in which the vehicle characteristic information of each of the vehicle models VM1 to VM8 is set. For example, the vehicle information acquisition unit 140 acquires the vehicle characteristics and a deterioration degree of a battery of the electric vehicle 2.

The sales determination unit 150 determines whether to sell the vehicle characteristic information of each of the vehicle models VM1 to VM8 based on the vehicle information and the vehicle state of the electric vehicle 2 acquired by the vehicle information acquisition unit 140. For example, when the vehicle characteristic of the electric vehicle 2 for which the vehicle characteristic information of each of the vehicle models VM1 to VM8 is set does not satisfy the vehicle characteristic information of the corresponding one of the vehicle models VM1 to VM8, the sales determination unit 150 prohibits selling the corresponding one of the vehicle models VM1 to VM8. That is, when the vehicle characteristic of the electric vehicle 2 for which the vehicle characteristic information is set, for example, the driving force characteristics do not satisfy the vehicle characteristic information of the corresponding one of the vehicle models VM1 to VM8, there is a high possibility of being disappointed even if the vehicle characteristic information is purchased, and thus the disappointment can be prevented by prohibiting the purchasing. However, in the determination as to whether the vehicle characteristic information is satisfied, a maximum output of a motor may be allowed to be instantaneously increased within a range in which the motor or the like is not affected from a viewpoint of protection of the motor or the like.

When the deterioration degree of the battery of the electric vehicle 2 for which the vehicle characteristic information of each of the vehicle models VM1 to VM8 is set is equal to or greater than a predetermined value, the sales determination unit 150 prohibits selling the vehicle characteristic information of the corresponding one of the vehicle models VM1 to VM8. That is, when the vehicle characteristics of the electric vehicle 2 for which the vehicle characteristic information is set, for example, the driving force characteristics are originally satisfied, but deterioration of the battery of the electric vehicle 2 progresses, the vehicle characteristic information of each of the vehicle models VM1 to VM8 may not be satisfied. In such a case, since there is a high possibility of being disappointed even if the vehicle characteristic information is purchased, the disappointment is prevented by prohibiting the purchasing.

### [Electric Vehicle]

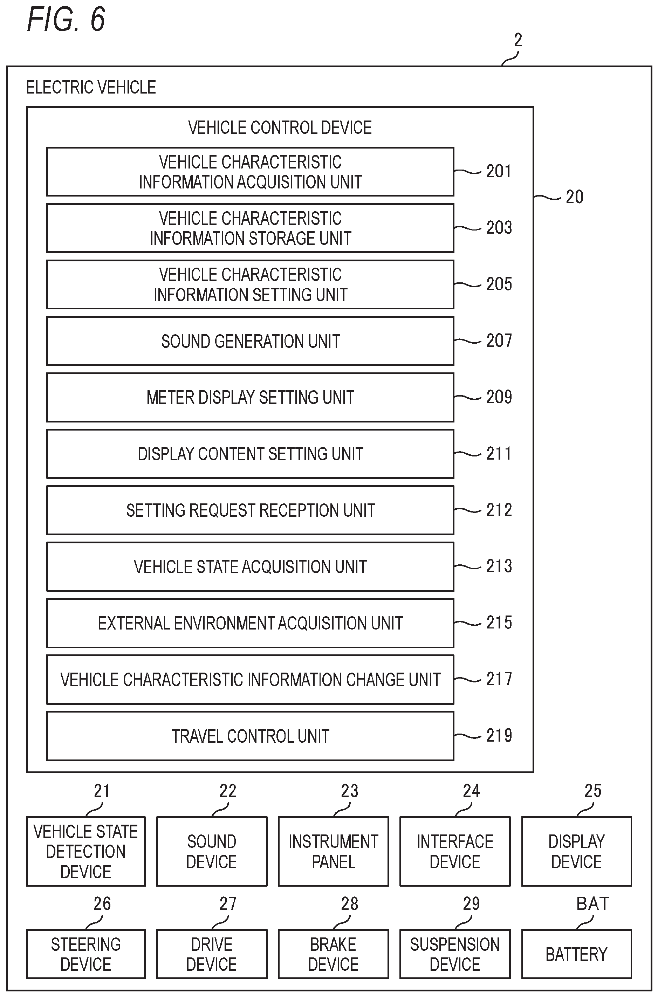

As shown in Fig. 6, the electric vehicle 2 includes a vehicle state detection device 21, a sound device 22, an instrument panel 23, an interface device 24, a display device 25, a steering device 26, a drive device 27, a brake device 28, a suspension device 29, a battery BAT, and a vehicle control device 20.

The vehicle state detection device 21 detects various states of the electric vehicle 2 such as an SOC of the battery BAT and a deterioration state of a brake pad of the brake device 28.

The sound device 22 outputs a sound to a vehicle interior. The sound to be output by the sound device 22 is set by the vehicle control device 20.

The instrument panel 23 performs meter display of various types of vehicle information such as the vehicle speed and the SOC of the battery BAT. The instrument panel 23 is implemented by a display device such as a liquid crystal panel capable of freely changing a meter display mode. The meter display mode of the instrument panel 23 is set by the vehicle control device 20.

The interface device 24 enables wireless communication with the server device 1 and the portable terminal 3 by an over the air (OTA) technique.

The display device 25 performs various types of display when purchasing and selecting each of the vehicle models VM1 to VM8, individually setting the vehicle characteristic information, and the like. In the present embodiment, a display unit of a car navigation system is also used as the display device 25. The display device 25 is not limited to an in-vehicle device, and may be the portable terminal 3 such as a smartphone or a tablet.

The steering device 26 steers front wheels (not shown) in response to an operation of a steering wheel SW (see Fig. 1). The steering device 26 can change a steering force (operation force) of the steering wheel SW, and the steering force of the steering wheel SW is set by the vehicle control device 20.

The drive device 27 includes a motor, and causes the electric vehicle 2 to travel by driving the motor corresponding to an operation on an accelerator pedal (not shown). The motor may include only a front-wheel driving motor, may include only a rear-wheel driving motor, or may include the front-wheel driving motor and the rear-wheel driving motor. Further, one motor may serve as both the front-wheel driving motor and the rear-wheel driving motor. The number of front-wheel driving motors and/or the number of rear-wheel driving motors may each be one or two. The drive device 27 has setting items such as responsiveness of the accelerator pedal, a driving force for a stroke of the accelerator pedal, front-rear driving force distribution, and vehicle behavior stabilization control parameters, and these settings are performed by the vehicle control device 20.

The brake device 28 brakes the electric vehicle 2 in response to an operation on a brake pedal. The brake device 28 has setting items such as a reaction force for a stroke of the brake pedal, a braking force for the stroke of the brake pedal, braking characteristics in a single pedal mode, ON/OFF of a brake hold function, and ON/OFF of an automatic speed reduction mechanism for driving assistance system cooperation, and these settings are performed by the vehicle control device 20.

The suspension device 29 buffers an impact between a vehicle body and vehicle wheels. The suspension device 29 has setting items such as a damper damping force and an air suspension height (vehicle height), and these settings are performed by the vehicle control device 20.

The battery BAT supplies electric power to the motor or the like. Therefore, there is a possibility that the original vehicle characteristics cannot be obtained depending on the deterioration degree or the SOC of the battery BAT.

### [Vehicle Control Device]

The vehicle control device 20 includes, as a functional configuration implemented by cooperation of hardware and software, a vehicle characteristic information acquisition unit 201, a vehicle characteristic information storage unit 203, a vehicle characteristic information setting unit 205, a sound generation unit 207, a meter display setting unit 209, a display content setting unit 211, a setting request reception unit 212, a vehicle state acquisition unit 213, an external environment acquisition unit 215, a vehicle characteristic information change unit 217, and a travel control unit 219.

The vehicle characteristic information acquisition unit 201 acquires the vehicle characteristic information of each of the vehicle models VM1 to VM8. For example, when the user purchases each of the vehicle models VM1 to VM8 from the server device 1 via the interface device 24, the vehicle characteristic information acquisition unit 201 acquires the vehicle characteristic information of the corresponding one of the vehicle models VM1 to VM8 and the image of the corresponding one of the vehicle models VM1 to VM8 provided from the server device 1. When the user purchases each of the vehicle models VM1 to VM8 from the server device 1 via the portable terminal 3, the vehicle characteristic information acquisition unit 201 acquires the vehicle characteristic information of the corresponding one of the vehicle models VM1 to VM8 and the image of the corresponding one of the vehicle models VM1 to VM8 transferred from the portable terminal 3.

Further, when the user purchases the optional part model from the server device 1, the vehicle characteristic information acquisition unit 201 acquires the vehicle characteristic information of each of the vehicle models VM1 to VM8 corresponding to the optional part model and the image of each of the vehicle models VM1 to VM8 in which the optional part model is mounted.

The vehicle characteristic information storage unit 203 stores the vehicle characteristic information of each of the vehicle models VM1 to VM8 and the image of each of the vehicle models VM1 to VM8, which are acquired by the vehicle characteristic information acquisition unit 201. According to such a vehicle characteristic information storage unit 203, since the image of the purchased one of the vehicle models VM1 to VM8 is stored together with the vehicle characteristic information, the image of the purchased one of the vehicle models VM1 to VM8 can be displayed on the display device 25 or the like to be shown to the user.

Further, the vehicle characteristic information storage unit 203 stores not only the vehicle characteristic information of the purchased one of the vehicle models VM1 to VM8 but also original vehicle characteristic information set in advance in the host vehicle. In this way, if the original vehicle characteristic information is also stored, the original vehicle characteristics can be restored in an emergency or the like without communication or setting change.

The vehicle characteristic information setting unit 205 sets, in the host vehicle, the driving force characteristics of the drive device included in the vehicle characteristic information of the purchased one of the vehicle models VM1 to VM8, and reproduces the driving force characteristics of the purchased one of the vehicle models VM1 to VM8. Accordingly, the user can experience the host vehicle to which the driving force characteristics of the purchased one of the vehicle models VM1 to VM8 are applied. For example, when each of the vehicle models VM1 to VM8 is an engine vehicle, the driving force characteristics of the engine vehicle are applied, and thus the engine vehicle can be reproduced in spite of the electric vehicle 2. When the user purchases the optional part model, the vehicle characteristic information setting unit 205 sets the vehicle characteristic information corresponding to the optional part model in the host vehicle.

Further, the vehicle characteristic information setting unit 205 is configured to set in advance, when the host vehicle is started, whether to set the original vehicle characteristic information or to continue the vehicle characteristic information of one of the vehicle models VM1 to VM8 set last time. In this way, a degree of freedom in selection can be provided to the user.

The vehicle characteristic information setting unit 205 prohibits a change in the vehicle characteristic information related to the brake device 28 in vehicle behavior stabilization control, such as a sideslip prevention mechanism (VSA), a wheel spin prevention mechanism (TCS), and an anti-lock brake system (ABS). In this way, in the vehicle behavior stabilization control, by prohibiting the change in the vehicle characteristic information related to the brake device 28, stability of the vehicle behavior can be prioritized.

Further, the vehicle characteristic information setting unit 205 prohibits setting the vehicle characteristic information of the purchased one of the vehicle models VM1 to VM8, based on the state of the host vehicle or the external environment. For example, the vehicle characteristic information setting unit 205 prohibits setting the vehicle characteristic information of the purchased one of the vehicle models VM1 to VM8 in a state where the SOC of the battery BAT is insufficient, a state where a brake pad of the brake device 28 is deteriorated, and an extremely low temperature state where a performance of the battery BAT is deteriorated. In this way, when the vehicle characteristic information of each of the vehicle models VM1 to VM8 is not satisfied due to the state of the host vehicle or the external environment, the setting is prohibited, and thus disappointment can be prevented.

The sound generation unit 207 sets, in the host vehicle, the sound information included in the vehicle characteristic information of the purchased one of the vehicle models VM1 to VM8, and generates (reproduces) a sound of the drive device of the purchased one of the vehicle models VM1 to VM8. Accordingly, the user can experience the host vehicle to which not only the driving force characteristics of the purchased one of the vehicle models VM1 to VM8 but also the sound information of the drive device is applied. For example, when each of the vehicle models VM1 to VM8 is an engine vehicle, since the sound information including the engine sound is applied in addition to the driving force characteristics of the engine vehicle, the engine vehicle can be reproduced more faithfully in spite of the electric vehicle 2.

The meter display setting unit 209 sets, in the host vehicle, the meter display information included in the vehicle characteristic information of the purchased one of the vehicle models VM1 to VM8, and reproduces the meter display of the purchased one of the vehicle models VM1 to VM8. Accordingly, by applying the meter display information in addition to the driving force characteristics and the sound information, each of the vehicle models VM1 to VM8 can be reproduced more faithfully.

The display content setting unit 211 controls a display content to be displayed on the display device 25. For example, the display content setting unit 211 displays a list of images of those purchased from among the vehicle models VM1 to VM8 on the display device 25. When the user purchases the optional part model from the server device 1, the display content setting unit 211 displays the image of each of the vehicle models VM1 to VM8, in which the optional part model is mounted, on the display device 25.

The setting request reception unit 212 receives, from the user, designation for one of the vehicle models VM1 to VM8 to be set for the host vehicle on a list screen of the images of those of the vehicle models VM1 to VM8 purchased by the user. The designation may be input from the display device 25, for example, input from a touch panel of a car navigation system, or input from the portable terminal 3 of the user. Then, the vehicle characteristic information setting unit 205, the sound generation unit 207, and the meter display setting unit 209 set, in the host vehicle, the vehicle characteristic information (the driving force characteristic, the sound information, and the meter display information) of the designated one of the vehicle models VM1 to VM8 in response to the designation being received by the setting request reception unit 212. Accordingly, the user can select any one of the vehicle models VM1 to VM8 from the purchased vehicle models VM1 to VM8 according to a mood and a situation.

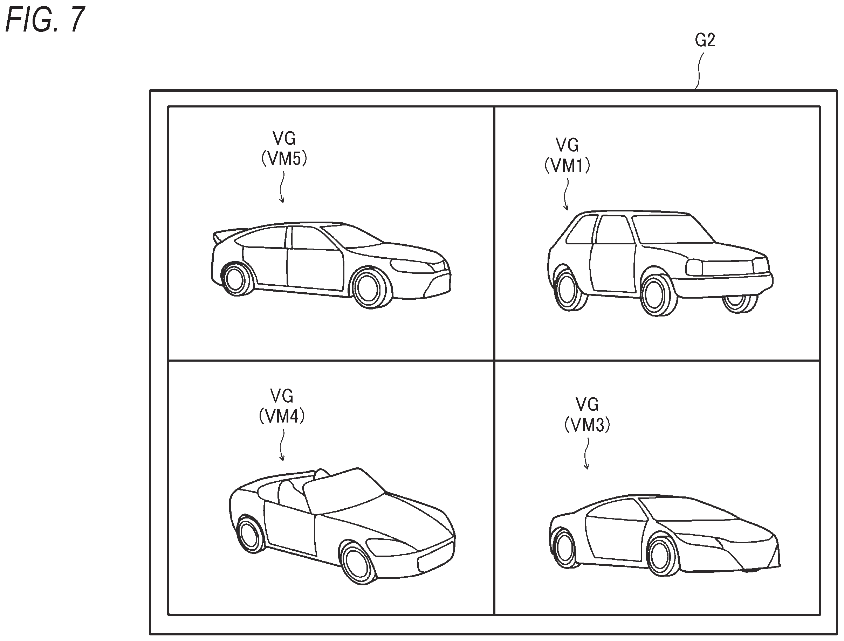

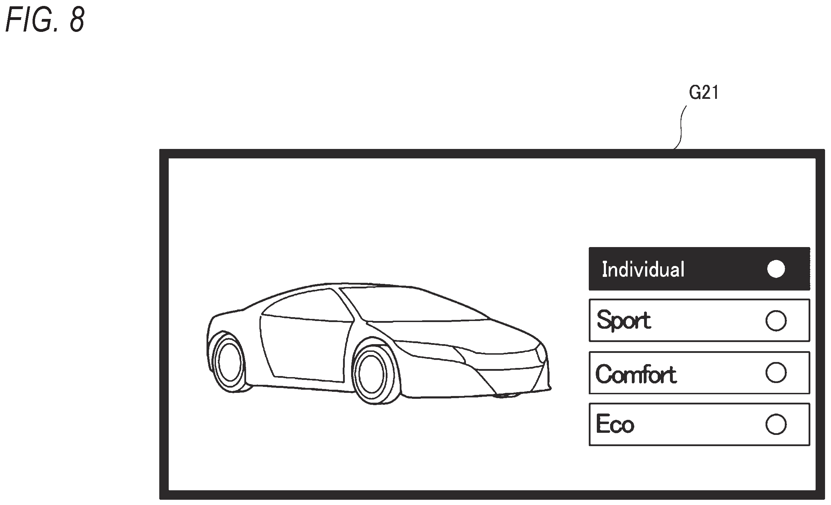

An example of Fig. 7 illustrates a screen G2 on which the vehicle models VM1, VM3, VM4, and VM5 are displayed as the vehicle models purchased by the user. When the designated vehicle model VM3 has a plurality of travel modes (sport mode, comfort mode, eco-mode, and individual mode), the display content setting unit 211 displays a travel mode selection screen G21 indicating the plurality of travel modes on the display device 25, as illustrated in Fig. 8, and the setting request reception unit 212 receives designation for the travel mode to be set for the host vehicle from the user. Then, the vehicle characteristic information setting unit 205 and the sound generation unit 207 set the vehicle characteristic information (the driving force characteristic and the sound information) of the designated travel mode in the host vehicle in response to the designation of the travel mode being received by the setting request reception unit 212. Accordingly, the vehicle model VM3 having a plurality of travel modes can be reproduced more faithfully.

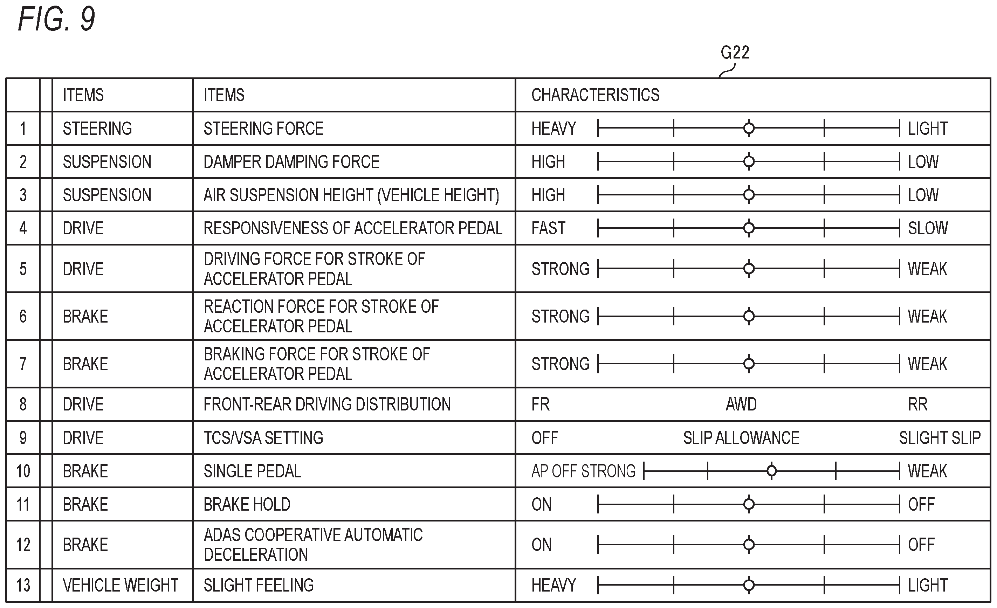

Further, when the plurality of travel modes include the individual mode in which the vehicle characteristic information can be individually set, and the user selects the individual mode, the display content setting unit 211 shifts the display screen of the display device 25 from the travel mode selection screen G21 (see Fig. 8) indicating the selected travel mode to an individual setting screen G22 (see Fig. 9) of the vehicle characteristic information, and receives individual settings of the vehicle characteristic information from the user.

Accordingly, the user can individually set information on the steering force of the steering device 26, information on the damping force of the suspension device 29, information on an air pressure of the suspension device 29, the responsiveness of the accelerator pedal, the driving force for the stroke of the accelerator pedal, the reaction force for the stroke of the brake pedal, the braking force for the stroke of the brake pedal, the front-rear driving force distribution, setting information for the vehicle behavior stabilization control (VSA or the like), or the like.

When the individual mode is selected, the user can set a weight of the vehicle model VM3. Then, when a vehicle weight of the vehicle model VM3 is changed, the corresponding driving force characteristic is applied, and the vehicle behavior is changed. For example, a light vehicle behavior can be experienced by setting a light vehicle weight.

Further, when the individual mode is selected, the user can set magnitude of a deceleration after the accelerator pedal is released. Then, when the deceleration after the accelerator pedal is released is changed, the corresponding driving force characteristic is applied, and the vehicle behavior is changed. Accordingly, the user can obtain a vehicle behavior corresponding to his/her preferred.

The vehicle state acquisition unit 213 acquires the state of the host vehicle (the SOC of the battery BAT, the deterioration state of the brake pad, and the like) and notifies the vehicle characteristic information setting unit 205.

The external environment acquisition unit 215 acquires the external environment (such as an outside air temperature) and notifies the vehicle characteristic information setting unit 205.

The vehicle characteristic information change unit 217 changes the vehicle characteristic information of the purchased one of the vehicle models VM1 to VM8 in response to a request from the user. For example, the vehicle characteristic information change unit 217 can change the sound information in response to the request from the user. In this way, a sound created by the user independently can be applied to the host vehicle. Further, by providing an environment in which the user can create, edit, post, distribute, and download a sound source and providing an environment (application) in which the sound is created together, it is possible to accommodate a wide range of user preferences, for example, an old-fashioned VTEC (Variable valve Timing and lift Electric Control system) sound, a sound that reduces accidents, a sound that puts children to sleep, or a sound that increases quietness.

Further, the vehicle characteristic information change unit 217 is configured to extract the changed vehicle characteristic information and sound information. In this way, the vehicle characteristic information and sound information changed by the user can be sold to others.

The travel control unit 219 controls the travel of the host vehicle according to the set driving force characteristics and an operation of the user. For example, when the selected one of the vehicle models VM1 to VM8 is a manual vehicle, the travel control unit 219 reproduces a step shift of the manual vehicle in a pseudo manner based on step shift information included in the vehicle characteristic information. The step shift can be reproduced, for example, by setting driving force diagrams of the vehicle models VM1 to VM8 corrected based on a vehicle weight ratio obtained by dividing the vehicle weight of the host vehicle by a vehicle weight of each of the vehicle models VM1 to VM8, to respective gear stages.

When the host vehicle has a paddle shift, the travel control unit 219 performs a step shift in response to an operation of the paddle shift. Accordingly, it is possible to experience a shift operation based on an intention of the user, even in the electric vehicle 2.

Further, when the purchased vehicle models VM1 to VM8 each have a single pedal mode, the travel control unit 219 reproduces the single pedal mode based on single pedal mode information included in the vehicle characteristic information. Accordingly, the vehicle models VM1 to VM8 each having the single pedal mode can be reproduced more faithfully.

Although various embodiments have been described above with reference to the drawings, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, respective constituent elements in the above-described embodiment may be freely combined without departing from the gist of the invention.

For example, in the above embodiment, the engine sound of the vehicle is exemplified as the sound information, the sound information may be sound information of a jet machine including an acceleration sound and a takeoff sound, sound information of a ship including an engine sound and a wave sound, or sound information such as an engine sound of a two-wheeled vehicle.

In the present description, at least the following matters are described. In the parentheses, the corresponding constituent elements and the like in the above embodiment are illustrated, but the present invention is not limited thereto.
(1) A server device including:
   an image display control unit (image display control unit 110) configured to control display of an image of each of a plurality of vehicle models which includes vehicle characteristic information indicating vehicle characteristics;
   a purchase reception unit (purchase reception unit 120) configured to receive a purchase of the vehicle model; and
   a characteristic information providing unit (characteristic information providing unit 130) configured to provide the vehicle characteristic information of the purchased vehicle model, in which
   the vehicle characteristic information includes driving force characteristics of a drive device of the vehicle model and sound information of the drive device of the vehicle model.
   According to (1), the user can experience a host vehicle in which the driving force characteristics of the purchased vehicle model and the sound information of the drive device are applied. Accordingly, the user can experience, while riding in the host vehicle, a feeling of driving another vehicle, for example, a tribute vehicle. In particular, by applying the sound information of the drive device in addition to the driving force characteristics, the tribute vehicle can be reproduced more faithfully.
(2) The server device according to (1), in which
   the image display control unit displays the image of the vehicle model in a rotatable manner.
   According to (2), the user can view an entire view of the vehicle model before purchase, and can select a preferred vehicle. For example, when the vehicle model is the tribute vehicle, it is possible to visually arouse purchase motivation.
(3) The server device according to (1) or (2), in which
   the image display control unit displays performance characteristics derived from the vehicle characteristic information, together with the image of the vehicle model.
   According to (3), by displaying the performance characteristics before purchasing the vehicle model, it becomes easy to visualize the vehicle characteristics.
(4) The server device according to (2) or (3), in which
   the image display control unit displays at least one of a body color, a wheel appearance, and presence or absence of an optional part model to be changeable by a selection of a user in the image of the vehicle model.
   According to (4), the image of the vehicle model to be purchased can be expanded.
(5) The server device according to any one of (1) to (4), in which
   when selling an optional part model for the purchased vehicle model, the image display control unit displays an image in which the optional part model is attached to the vehicle model.
   According to (5), after purchasing the vehicle model and before further purchasing the optional part model, the user can view the image of the vehicle model to which the optional part model is attached.
(6) The server device according to (5), in which
   when the optional part model is purchased, the characteristic information providing unit provides the image in which the optional part model is attached to the vehicle model and the vehicle characteristic information corresponding to the optional part model.
   According to (6), when the optional part model such as a wing model or an aero part model is added, by changing the vehicle characteristic information to increase a downforce, a vehicle behavior can also be changed in addition to a change in appearance.
(7) The server device according to any one of (1) to (6), in which
   tire replacement is possible for the vehicle model that is sold, and
   when a tire model is purchased, the characteristic information providing unit provides the vehicle characteristic information corresponding to the tire model.
   According to (7), when the tire replacement is performed, by changing the vehicle characteristic information to increase a grip force of a tire, the vehicle behavior can be changed.
(8) The server device according to any one of (1) to (7), further including:
   a vehicle information acquisition unit (vehicle information acquisition unit 140) configured to acquire vehicle information of a vehicle for which the vehicle characteristic information of the vehicle model is set; and
   a sales determination unit (sales determination unit 150) configured to determine, based on the vehicle information, whether to sell the vehicle characteristic information of the vehicle model, in which
   the sales determination unit prohibits selling the vehicle model when vehicle characteristics of the vehicle for which the vehicle characteristic information of the vehicle model is set do not satisfy the vehicle characteristic information of the vehicle model.
   According to (8), when the vehicle characteristics of the vehicle for which the vehicle characteristic information is set, for example, the driving force characteristics do not satisfy the vehicle characteristic information of the vehicle model, disappointment can be prevented by prohibiting the purchase.
(9) The server device according to (8), further including:
   a vehicle state acquisition unit (vehicle information acquisition unit 140) configured to acquire a vehicle state of the vehicle for which the vehicle characteristic information of the vehicle model is set, in which
   the vehicle state includes a deterioration degree of a battery, and
   the sales determination unit prohibits selling the vehicle characteristic information of the vehicle model when the deterioration degree of the battery of the vehicle for which the vehicle characteristic information of the vehicle model is set is equal to or greater than a predetermined value.
   According to (9), when the vehicle characteristics, for example, the driving force characteristics of the vehicle for which the vehicle characteristic information is set are originally satisfied, but deterioration of the battery of the vehicle progresses, the vehicle characteristic information of the vehicle model may not be satisfied. By prohibiting purchasing the vehicle model in such a case, disappointment can be prevented in advance.
(10) The server device according to any one of (1) to (9), in which
   the vehicle characteristic information includes meter display information of the vehicle model.
   According to (10), by applying the meter display information in addition to the driving force characteristics and the sound information, the tribute vehicle can be reproduced more faithfully.
(11) The server device according to any one of (1) to (10), in which
   the vehicle model is a model of a vehicle that is sold in the past and is not currently sold.
   According to (11), a past vehicle that is difficult to purchase can be experienced currently.
(12) The server device according to any one of (1) to (10), in which
   the vehicle models include
      a model of a vehicle that is sold in the past and is not currently sold, and
      a model of a vehicle in which a user is able to set the vehicle characteristic information.
   According to (12), by preparing the vehicle model that can be set by the user, the user can generate his/her preferred vehicle characteristics.
(13) A vehicle control device including:
   a vehicle characteristic information acquisition unit (vehicle characteristic information acquisition unit 201) configured to acquire vehicle characteristic information indicating vehicle characteristics of a vehicle model;
   a vehicle characteristic information storage unit (vehicle characteristic information storage unit 203) configured to store the vehicle characteristic information;
   a vehicle characteristic information setting unit (vehicle characteristic information setting unit 205) configured to set the vehicle characteristic information in a host vehicle; and
   a sound generation unit (sound generation unit 207) configured to generate a sound, in which
   the vehicle characteristic information includes driving force characteristics of a drive device of the vehicle model and sound information of the drive device of the vehicle model,
   the vehicle characteristic information setting unit sets the driving force characteristics of the drive device in the host vehicle, and
   the sound generation unit sets the sound information of the drive device in the host vehicle.
   According to (13), a user can experience the host vehicle to which the driving force characteristics of the purchased vehicle model and the sound information of the drive device are applied. Accordingly, the user can experience, while riding in the host vehicle, a feeling of driving another vehicle, for example, a tribute vehicle. In particular, by applying the sound information of the drive device in addition to the driving force characteristics, the tribute vehicle can be reproduced more faithfully.
(14) The vehicle control device according to (13), in which
   the drive device of the host vehicle includes a motor, and
   the drive device of the vehicle model includes an engine.
   According to (14), an engine vehicle can be reproduced in spite of an electric vehicle.
(15) The vehicle control device according to (13) or (14), further including:
   a meter display setting unit (meter display setting unit 209) configured to generate a meter display to be displayed on an instrument panel (instrument panel 23), in which
   the vehicle characteristic information includes meter display information, and
   the meter display setting unit sets the meter display information of the vehicle model in the host vehicle.
   According to (15), by applying the meter display information in addition to the driving force characteristics and the sound information, the tribute vehicle can be reproduced more faithfully.
(16) The vehicle control device according to any one of (13) to (15), in which
   the vehicle control device is connected to an interface device (interface device 24) capable of performing wireless communication with a server device (server device 1), and
   when a user purchases the vehicle model from the server device, the vehicle characteristic information of the vehicle model is provided from the server device and stored in the vehicle characteristic information storage unit.
   According to (16), since the vehicle characteristic information is provided by an over the air (OTA) technique, that is, the wireless communication, the vehicle characteristic information can be easily updated.
(17) The vehicle control device according to (16), in which
   the vehicle characteristic information is provided from the server device and stored in the vehicle characteristic information storage unit, together with an image of the vehicle model including the vehicle characteristic information.
   According to (17), since the image of the purchased vehicle model is provided together with vehicle characteristic information, a vehicle model purchased by a terminal device such as a smartphone or a car navigation system can be viewed.
(18) The vehicle control device according to (17) further including:
   a display device (display device 25) configured to display the image of the vehicle model;
   a display content setting unit (display content setting unit 211) configured to control a display content to be displayed on the display device; and
   a setting request reception unit (setting request reception unit 212) configured to receive a setting request from the user, in which
   the display content setting unit displays, on the display device, a list of the image of the vehicle model including the vehicle characteristic information,
   the setting request reception unit receives designation for the vehicle model to be set from the list from the user, and
   the vehicle characteristic information setting unit sets the vehicle characteristic information of the designated vehicle model in the host vehicle.
   According to (18), the vehicle model can be selected according to a mood or a situation of the user.
(19) The vehicle control device according to (18), in which
   when the user purchases an optional part model from the server device, the image of the vehicle model in which the optional part model is mounted and the vehicle characteristic information corresponding to the optional part model are provided from the server device and stored in the vehicle characteristic information storage unit,
   the display content setting unit displays the image of the vehicle model in which the optional part model is mounted on the display device, and
   the vehicle characteristic information setting unit sets the vehicle characteristic information corresponding to the optional part model in the host vehicle.
   According to (19), when the optional part model such as the wing model or the aero part model is added, the user can view the image of the vehicle model in which the optional part model is mounted. Further, by changing the vehicle characteristic information to increase the downforce, the vehicle behavior can also be changed in addition to the change in appearance.
(20) The vehicle control device according to any one of (13) to (19), in which
   the vehicle characteristic information storage unit stores
      original vehicle characteristic information set in advance in the host vehicle, and
      the vehicle characteristic information of the purchased vehicle model.
   According to (20), since the original vehicle characteristic information is stored in the vehicle characteristic information storage unit, original vehicle characteristics can be restored in an emergency or the like without communication or setting change.
(21) The vehicle control device according to (20), in which
   whether to set the original vehicle characteristic information or to continue the previously set vehicle characteristic information is configured to be set in advance when the host vehicle is started.
   According to (21), a degree of freedom in selection can be provided to the user.
(22) The vehicle control device according to any one of (13) to (21), in which
   the vehicle characteristic information setting unit prohibits a change in the vehicle characteristic information related to a brake device in vehicle behavior stabilization control.
   According to (22), in the vehicle behavior stabilization control of a sideslip prevention mechanism (VSA), a wheel spin prevention mechanism (TCS), an anti-lock brake system (ABS), or the like and the like, by prohibiting the change in the vehicle characteristic information related to the brake device, stability of the vehicle behavior can be prioritized.
(23) The vehicle control device according to any one of (13) to (22), further including:
   a vehicle state acquisition unit (vehicle state acquisition unit 213) configured to acquire a state of the host vehicle or an external environment acquisition unit (external environment acquisition unit 215) configured to determine an external environment, in which
   the vehicle characteristic information setting unit prohibits setting the vehicle characteristic information of the purchased vehicle model based on the state of the host vehicle or the external environment.
   According to (23), when the vehicle characteristic information of the vehicle model is not satisfied due to the state of the host vehicle or the external environment, the setting is prohibited, and thus the disappointment can be prevented.
(24) The vehicle control device according to (23), in which
   the state of the host vehicle includes at least one of an SOC of a battery (battery BAT) and a deterioration state of a brake pad of a brake device (brake device 28).
   According to (24), a situation in which the driving force characteristics of the drive device of the vehicle model is not satisfied can be avoided by considering the SOC of the battery, and a situation in which braking characteristics of the vehicle model is not satisfied can be avoided by considering the deterioration state of the brake pad of the brake device.
(25) The vehicle control device according to (23), in which
   the external environment includes an outside air temperature.
   According to (25), a situation can be avoided in which the driving force characteristics of the drive device of the vehicle model are not satisfied due to performance deterioration of the battery caused by an extremely low temperature state.
(26) The vehicle control device according to any one of (13) to (25), further including:
   a vehicle characteristic information change unit (vehicle characteristic information change unit 217) configured to change the vehicle characteristic information of the purchased vehicle model, in which
   the vehicle characteristic information change unit allows a user to change the sound information.
   According to (26), a sound created by the user independently can be applied. Further, by providing an environment in which the user can create, edit, post, distribute, and download a sound source and providing an environment (application) in which the sound is created together, it is possible to accommodate a wide range of user preferences, for example, an old-fashioned VTEC (Variable valve Timing and lift Electric Control system) sound, a sound that reduces accidents, a sound that puts children to sleep, or a sound that increases quietness.
(27) The vehicle control device according to (26), in which
   the vehicle characteristic information and sound information after the change are configured to be extracted.
   According to (27), the vehicle characteristic information and sound information changed by the user can be sold to others.
(28) The vehicle control device according to any one of (13) to (27), in which
   the host vehicle is an EV vehicle and the vehicle model is a manual vehicle,
   the vehicle characteristic information includes a step shift stage, and
   in the step shift stage, a driving force diagram of the vehicle model, which is corrected based on a vehicle weight ratio obtained by dividing a vehicle weight of the host vehicle by a vehicle weight of the vehicle model, is set to each gear stage.
   According to (28), the user can experience a step shift of a manual vehicle in a pseudo manner, even in the EV vehicle.
(29) The vehicle control device according to (28), further including:
   a travel control unit (travel control unit 219) configured to control travel of the host vehicle, in which
   when the host vehicle has a paddle shift,
   a step shift is performed in response to an operation of the paddle shift.
   According to (29), it is possible to experience a shift operation based on an intention of the user.
(30) The vehicle control device according to any one of (13) to (29), in which
   when the purchased vehicle model has a single pedal mode,
   a user is able to select the single pedal mode.
   According to (30), the tribute vehicle can be reproduced more faithfully.
(31) The vehicle control device according to any one of (13) to (30), in which
   when the purchased vehicle model has a plurality of travel modes,
   a user is able to select any one of the plurality of travel modes.
   According to (31), the tribute vehicle can be reproduced more faithfully.
(32) The vehicle control device according to (31), in which
   when the plurality of travel modes include an individual mode in which the vehicle characteristic information is able to be individually set,
   the user is able to set at least one of information on a steering force of a steering device, information on a damping force of a suspension device, information on an air pressure of the suspension device, responsiveness of an accelerator pedal, a driving force for a stroke of the accelerator pedal, a reaction force for a stroke of a brake pedal, a braking force for the stroke of the brake pedal, front-rear driving force distribution, and setting information for vehicle behavior stabilization control.
   According to (32), the user can freely set the driving force characteristics.
(33) The vehicle control device according to (31) or (32), in which
   when the plurality of travel modes include an individual mode in which the vehicle characteristic information is able to be individually set,
   the user is able to set a weight of the vehicle model.
   According to (33), by changing the vehicle weight of the vehicle model, the vehicle behavior can be changed. For example, a light vehicle behavior can be achieved by setting a light vehicle weight.
(34) The vehicle control device according to any one of (31) to (33), in which
   when the plurality of travel modes include an individual mode in which the vehicle characteristic information is able to be individually set,
   the user is able to set magnitude of a deceleration after an accelerator pedal is released.
   According to (34), by making it possible to change the deceleration after the accelerator pedal is released, the vehicle behavior can be changed.
(35) An electric vehicle (electric vehicle 2) including:
   a drive device (drive device 27) including at least one of a front-wheel driving motor and a rear-wheel driving motor;
   a battery (battery BAT) configured to supply electric power to the motor;
   an acoustic device (sound device 22) configured to emit a sound to a vehicle interior; and
   a vehicle control device (vehicle control device 20) configured to control the drive device and the acoustic device, in which
   the vehicle control device includes
      a vehicle characteristic information acquisition unit (vehicle characteristic information acquisition unit 201) configured to acquire vehicle characteristic information indicating vehicle characteristics of a vehicle model,
      a vehicle characteristic information storage unit (vehicle characteristic information storage unit 203) configured to store the vehicle characteristic information,
      a vehicle characteristic information setting unit (vehicle characteristic information setting unit 205) configured to set the vehicle characteristic information in a host vehicle, and
      a sound generation unit (sound generation unit 207) configured to generate a sound,
   the vehicle characteristic information includes driving force characteristics of the drive device of the vehicle model and sound information of the drive device of the vehicle model,
   the vehicle characteristic information setting unit sets the driving force characteristics of the drive device in the host vehicle, and
   the sound generation unit sets the sound information of the drive device of the vehicle model in the host vehicle.

According to (35), the user can experience the host vehicle to which the driving force characteristics of the purchased vehicle model and the sound information of the drive device are applied. Accordingly, the user can experience, while riding in the host vehicle, a feeling of driving another vehicle, for example, a tribute vehicle. In particular, by applying the sound information of the drive device in addition to the driving force characteristics, the tribute vehicle can be reproduced more faithfully.

### REFERENCE SIGNS LIST

1 server device
110 image display control unit
120 purchase reception unit
130 characteristic information providing unit
140 vehicle information acquisition unit
150 sales determination unit
2 electric vehicle
20 vehicle control device
201 vehicle characteristic information acquisition unit
203 vehicle characteristic information storage unit
205 vehicle characteristic information setting unit
207 sound generation unit
209 meter display setting unit
211 display content setting unit
212 setting request reception unit
213 vehicle state acquisition unit
215 external environment acquisition unit
217 vehicle characteristic information change unit
219 travel control unit
22 sound device (acoustic device)
23 instrument panel
24 interface device
25 display device
26 steering device
27 drive device
28 brake device
29 suspension device

## Claims

1. A server device comprising:
an image display control unit configured to control display of an image of each of a plurality of vehicle models which includes vehicle characteristic information indicating vehicle characteristics;
a purchase reception unit configured to receive a purchase of the vehicle model; and
a characteristic information providing unit configured to provide the vehicle characteristic information of the purchased vehicle model, wherein
the vehicle characteristic information includes driving force characteristics of a drive device of the vehicle model and sound information of the drive device of the vehicle model.

2. The server device according to claim 1, wherein
the image display control unit displays the image of the vehicle model in a rotatable manner.

3. The server device according to claim 1 or 2, wherein
the image display control unit displays performance characteristics derived from the vehicle characteristic information, together with the image of the vehicle model.

4. The server device according to claim 2 or 3, wherein
the image display control unit displays at least one of a body color, a wheel appearance, and presence or absence of an optional part model in the image of the vehicle model to be changeable by a selection of a user.

5. The server device according to any one of claim 1 to 4, wherein
when selling an optional part model for the purchased vehicle model, the image display control unit displays an image in which the optional part model is attached to the vehicle model.

6. The server device according to claim 5, wherein
when the optional part model is purchased, the characteristic information providing unit provides the image in which the optional part model is attached to the vehicle model and the vehicle characteristic information corresponding to the optional part model.

7. The server device according to any one of claims 1 to 6, wherein
tire replacement is possible for the vehicle model that is sold, and
when a tire model is purchased, the characteristic information providing unit provides the vehicle characteristic information corresponding to the tire model.

8. The server device according to any one of claims 1 to 7, further comprising:
a vehicle information acquisition unit configured to acquire vehicle information of a vehicle for which the vehicle characteristic information of the vehicle model is set; and
a sales determination unit configured to determine, based on the vehicle information, whether to sell the vehicle characteristic information of the vehicle model, wherein
the sales determination unit prohibits selling the vehicle model when vehicle characteristics of the vehicle for which the vehicle characteristic information of the vehicle model is set do not satisfy the vehicle characteristic information of the vehicle model.

9. The server device according to claim 8, further comprising:
a vehicle state acquisition unit configured to acquire a vehicle state of the vehicle for which the vehicle characteristic information of the vehicle model is set, wherein
the vehicle state includes a deterioration degree of a battery, and
the sales determination unit prohibits selling the vehicle characteristic information of the vehicle model when the deterioration degree of the battery of the vehicle for which the vehicle characteristic information of the vehicle model is set is equal to or greater than a predetermined value.

10. The server device according to any one of claims 1 to 9, wherein
the vehicle characteristic information includes meter display information of the vehicle model.

11. The server device according to any one of claims 1 to 10, wherein
the vehicle model is a model of a vehicle that is sold in the past and is not currently sold.

12. The server device according to any one of claims 1 to 10, wherein
the vehicle models include
a model of a vehicle that is sold in the past and is not currently sold, and
a model of a vehicle in which a user is able to set the vehicle characteristic information.

13. A vehicle control device comprising:
a vehicle characteristic information acquisition unit configured to acquire vehicle characteristic information indicating vehicle characteristics of a vehicle model;
a vehicle characteristic information storage unit configured to store the vehicle characteristic information;
a vehicle characteristic information setting unit configured to set the vehicle characteristic information in a host vehicle; and
a sound generation unit configured to generate a sound, wherein
the vehicle characteristic information includes driving force characteristics of a drive device of the vehicle model and sound information of the drive device of the vehicle model,
the vehicle characteristic information setting unit sets the driving force characteristics of the drive device in the host vehicle, and
the sound generation unit sets the sound information of the drive device in the host vehicle.

14. The vehicle control device according to claim 13, wherein
the drive device of the host vehicle includes a motor, and
the drive device of the vehicle model includes an engine.

15. The vehicle control device according to claim 13 or 14, further comprising:
a meter display setting unit configured to generate a meter display to be displayed on an instrument panel, wherein
the vehicle characteristic information includes meter display information, and
the meter display setting unit sets the meter display information of the vehicle model in the host vehicle.

16. The vehicle control device according to any one of claims 13 to 15, wherein
the vehicle control device is connected to an interface device capable of performing wireless communication with a server device, and
when a user purchases the vehicle model from the server device, the vehicle characteristic information of the vehicle model is provided from the server device and stored in the vehicle characteristic information storage unit.

17. The vehicle control device according to claim 16, wherein
the vehicle characteristic information is provided from the server device and stored in the vehicle characteristic information storage unit, together with an image of the vehicle model including the vehicle characteristic information.

18. The vehicle control device according to claim 17, further comprising:
a display device configured to display the image of the vehicle model;
a display content setting unit configured to control a display content to be displayed on the display device; and
a setting request reception unit configured to receive a setting request from the user, wherein
the display content setting unit displays, on the display device, a list of the image of the vehicle model including the vehicle characteristic information,
the setting request reception unit receives designation for the vehicle model to be set from the list from the user, and
the vehicle characteristic information setting unit sets the vehicle characteristic information of the designated vehicle model in the host vehicle.

19. The vehicle control device according to claim 18, wherein
when the user purchases an optional part model from the server device, the image of the vehicle model in which the optional part model is mounted and the vehicle characteristic information corresponding to the optional part model are provided from the server device and stored in the vehicle characteristic information storage unit,
the display content setting unit displays the image of the vehicle model in which the optional part model is mounted on the display device, and
the vehicle characteristic information setting unit sets the vehicle characteristic information corresponding to the optional part model in the host vehicle.

20. The vehicle control device according to any one of claims 13 to 19, wherein
the vehicle characteristic information storage unit stores
original vehicle characteristic information set in advance in the host vehicle, and
the vehicle characteristic information of the purchased vehicle model.

21. The vehicle control device according to claim 20, wherein
whether to set the original vehicle characteristic information or to continue the previously set vehicle characteristic information is configured to be set in advance when the host vehicle is started.

22. The vehicle control device according to any one of claims 13 to 21, wherein
the vehicle characteristic information setting unit prohibits a change in the vehicle characteristic information related to a brake device in vehicle behavior stabilization control.

23. The vehicle control device according to any one of claims 13 to 22, further comprising:
a vehicle state acquisition unit configured to acquire a state of the host vehicle or an external environment acquisition unit configured to determine an external environment, wherein
the vehicle characteristic information setting unit prohibits setting the vehicle characteristic information of the purchased vehicle model based on the state of the host vehicle or the external environment.

24. The vehicle control device according to claim 23, wherein
the state of the host vehicle includes at least one of an SOC of a battery and a deterioration state of a brake pad of a brake device.

25. The vehicle control device according to claim 23, wherein
the external environment includes an outside air temperature.

26. The vehicle control device according to any one of claims 13 to 25, further comprising:
a vehicle characteristic information change unit configured to change the vehicle characteristic information of the purchased vehicle model, wherein
the vehicle characteristic information change unit allows a user to change the sound information.

27. The vehicle control device according to claim 26, wherein
the vehicle characteristic information and sound information after the change are configured to be extracted.

28. The vehicle control device according to any one of claims 13 to 27, wherein
the host vehicle is an EV vehicle and the vehicle model is a manual vehicle,
the vehicle characteristic information includes a step shift stage, and
in the step shift stage, a driving force diagram of the vehicle model, which is corrected based on a vehicle weight ratio obtained by dividing a vehicle weight of the host vehicle by a vehicle weight of the vehicle model, is set to each gear stage.

29. The vehicle control device according to claim 28, further comprising:
a travel control unit configured to control travel of the host vehicle, wherein
when the host vehicle has a paddle shift,
a step shift is performed in response to an operation of the paddle shift.

30. The vehicle control device according to any one of claims 13 to 29, wherein
when the purchased vehicle model has a single pedal mode,
a user can select the single pedal mode.

31. The vehicle control device according to any one of claims 13 to 30, wherein
when the purchased vehicle model has a plurality of travel modes,
a user is able to select any one of the plurality of travel modes.

32. The vehicle control device according to claim 31, wherein
when the plurality of travel modes include an individual mode in which the vehicle characteristic information is able to be individually set,
the user is able to set at least one of information on a steering force of a steering device, information on a damping force of a suspension device, information on an air pressure of the suspension device, responsiveness of an accelerator pedal, a driving force for a stroke of the accelerator pedal, a reaction force for a stroke of a brake pedal, a braking force for the stroke of the brake pedal, front-rear driving force distribution, and setting information for vehicle behavior stabilization control.

33. The vehicle control device according to claim 31 or 32, wherein
when the plurality of travel modes include an individual mode in which the vehicle characteristic information is able to be individually set,
the user is able to set a weight of the vehicle model.

34. The vehicle control device according to any one of claims 31 to 33, wherein
when the plurality of travel modes include an individual mode in which the vehicle characteristic information is able to be individually set,
the user is able to set magnitude of a deceleration after an accelerator pedal is released.

35. An electric vehicle comprising:
a drive device including at least one of a front-wheel driving motor and a rear-wheel driving motor;
a battery configured to supply electric power to the motor;
an acoustic device configured to emit a sound to a vehicle interior; and
a vehicle control device configured to control the drive device and the acoustic device, wherein
the vehicle control device includes
a vehicle characteristic information acquisition unit configured to acquire vehicle characteristic information indicating vehicle characteristics of a vehicle model,
a vehicle characteristic information storage unit configured to store the vehicle characteristic information,
a vehicle characteristic information setting unit configured to set the vehicle characteristic information in a host vehicle, and
a sound generation unit configured to generate a sound,
the vehicle characteristic information includes driving force characteristics of a drive device of the vehicle model and sound information of the drive device of the vehicle model,
the vehicle characteristic information setting unit sets the driving force characteristics of the drive device in the host vehicle, and
the sound generation unit sets the sound information of the drive device of the vehicle model in the host vehicle.
